# EUROPÄISCHE PATENTSCHRIFT

(11) **EP 2 138 254 B1**
(45) Veröffentlichungstag und Bekanntmachung des Hinweises auf die Patenterteilung: **12.07.2017**
(21) Anmeldenummer: 09006988.1
(22) Anmeldetag: 26.05.2009
(51) Int. Cl.: B23B 47/00

(54) **Vorrichtung zum Absaugen von Bohrgut beim Bohren mittels eines Bohrers in Mauerwerk und dergleichen**
Device for vacuuming away drilled material when drilling with a drill in masonry and similar
Dispositif d'aspiration de produits de forage lors du forage à l'aide d'un foret dans un mur ou analogue

(30) Priorität: 19.06.2008 DE 202008008561 U
(43) Veröffentlichungstag der Anmeldung: 30.12.2009
(73) Patentinhaber: ELECTROSTAR GmbH, 73262 Reichenbach/Fils (DE)
(72) Erfinder: Bruntner, Eugen, 73278 Schlierbach (DE)
(74) Vertreter: Jackisch-Kohl, Anna-Katharina

(56) Entgegenhaltungen:
- EP-A- 0 681 889
- EP-A- 0 799 674
- EP-A- 0 938 947
- EP-A- 1 894 653
- GB-A- 2 005 403

## Beschreibung

Die Erfindung betrifft eine Vorrichtung zum Absaugen von Bohrgut beim Bohren mit einem Bohrer in Mauerwerk und dergleichen nach dem Oberbegriff des Anspruches 1. Eine entsprechende Vorrichtung wird beispielsweise in EP0 799 674 beschrieben. Solche Vorrichtungen dienen dazu, das beim Bohren in Mauerwerk anfallende Bohrgut an der Bohrstelle abzusaugen, damit es nicht auf den Boden fällt. Hierzu wird die Vorrichtung an einen Saugschlauch eines Staubsaugers angeschlossen, mit dem das Bohrgut von der Bohrstelle abgesaugt wird. Hierbei entsteht im Unterdruckraum ein Unterdruck, der dafür sorgt, dass die Vorrichtung gegen das Mauerwerk gezogen wird. Die Vorrichtung muss darum nicht von Hand während des Bohrvorganges gehalten werden. Der Bohrer wird durch eine Öffnung der Wandung des Unterdruckraumes eingesetzt. Das beim Bohren anfallende Bohrgut wird im Unterdruckraum verwirbelt. Dies hat zur Folge, dass das Mauerwerk im Bereich um die Bohrstelle die Farbe des jeweiligen Materials des Bohrwerkes annimmt, so dass nach dem Bohren und nach dem Abnehmen der Vorrichtung am Mauerwerk ein die Bohrstelle umgebender Fleck vorhanden ist.

Es sind ferner Vorrichtungen bekannt, die eine integrierte Pumpe haben, die mittels eines Akkus betätigt wird. Um das beim Bohren anfallende Bohrgut aufzunehmen, ist diese Vorrichtung mit einem Sammelraum zur Aufnahme des Bohrgutes versehen. Er ist für den Durchtritt des Bohrers offen. Die Absaugung des Bohrgutes ist allerdings nur dann ausreichend wirksam, wenn sich der Sammelraum im Fallbereich des beim Bohren entstehenden Bohrgutes befindet. Das ist dann der Fall, wenn an einer vertikalen Wand gebohrt wird und sich der Sammelraum unterhalb der Bohrstelle befindet. Dann kann das Bohrgut nach unten in den Sammelraum fallen. Häufig jedoch wird im Decken- oder im Bodenbereich gebohrt. Dann gelangt das Bohrgut jedoch nur in ungenügendem Maße in den Sammelraum. Zudem ist das Fassungsvermögen des Sammelraumes gering.

Der Erfindung liegt die Aufgabe zugrunde, die gattungsgemäße Vorrichtung so auszubilden, dass das anfallende Bohrgut zuverlässig ohne Beeinträchtigung der Oberfläche des Mauerwerkes und unabhängig von der Lage der Vorrichtung während des Bohrvorganges abgesaugt wird.

Diese Aufgabe wird bei der gattungsgemäßen Vorrichtung erfindungsgemäß mit den kennzeichnenden Merkmalen des Anspruches 1 gelöst.

Bei der erfindungsgemäßen Vorrichtung sind die Absaugstelle, an der mit dem Bohrer gebohrt wird, und der Unterdruckraum räumlich voneinander getrennt. Dadurch wird verhindert, dass das Bohrgut in den Unterdruckraum gelangt und in diesem Bereich einen Fleck am Mauerwerk hinterlässt.

Vorteilhaft wird die Führungsbuchse in einer Absaughülse aufgenommen. Vorteilhaft ist hierbei, dass mit einer Absaughülse mit Führungsbuchse ein großer Durchmesserbereich von Bohrern abgedeckt werden kann, z.B. ein Durchmesserbereich von 6 mm bis 16 mm oder von 12 mm bis 20 mm.

Damit das Bohrgut zuverlässig abgesaugt werden kann, ist der Anschluss ein Anschlussstutzen, der an die Absaughülse anschließt. An den Anschlussstutzen lässt sich der Saugschlauch eines Staubsaugers anschließen, mit dem das Bohrgut unmittelbar von der Absaugstelle abgesaugt werden kann. Dadurch lassen sich auch große Mengen an Bohrgut problemlos absaugen.

Damit die Vorrichtung die Bedienungsperson beim Bohrvorgang nur wenig stört, erstreckt sich der Anschlussstutzen vorteilhaft spitzwinklig zur Achse der Absaughülse.

Die Führungsbuchse und die Absaughülse sind mit dem Anschlussstutzen vorteilhaft über eine Durchtrittsöffnung strömungstechnisch verbunden. Dadurch kann das Bohrgut von der Absaugstelle abgesaugt und über den Anschlussstutzen abgeführt werden.

Damit das beim Bohren anfallende Bohrgut über einen möglichst großen Umfangsbereich zuverlässig abgesaugt werden kann, erstreckt sich die Durchtrittsöffnung vorteilhaft in Umfangsrichtung der Führungsbuchse und der Absaughülse. Die Durchtrittsöffnung hat somit einen von der Kreisform abweichenden Umriss. Erfindungsgemäß mündet in den Unterdruckraum wenigstens eine Öffnung, die ihn mit dem Anschlussstutzen strömungstechnisch verbindet. Dabei ist auch in der Wandung des Unterdruckraumes wenigstens eine Entlastungsöffnung vorgesehen. Durch die beiden Öffnungen kann mit der Saugeinheit, vorzugsweise einem Staubsauger, eine Strömung erzeugt werden, die in Absaugrichtung des Anschlussstutzens verläuft. Durch diese Zwangsströmung wird gewährleistet, dass über den Anschlussstutzen abgesaugtes Bohrgut nicht durch die Öffnung zurück in den Unterdruckraum fällt. Vorteilhaft ist die den Unterdruckraum mit dem Anschlussstutzen strömungstechnisch verbindende Öffnung durch eine Trennwand von einem Saugkanal im Anschlussstutzen getrennt. Diese Trennwand in Verbindung mit der Zwangsströmung sorgt zuverlässig dafür, dass kein Bohrgut aus dem Anschlussstutzen durch die Öffnung in den Unterdruckraum gelangt. Dadurch ist es auch problemlos möglich, die erfindungsgemäße Vorrichtung an einer senkrechten Wand anzubringen. Der Saugstrom sowie die Zwangsströmung sorgen auch in dieser Lage der Vorrichtung dafür, dass das Bohrgut einwandfrei abgesaugt wird und nicht durch die Öffnung in den Unterdruckraum gelangt.

Um die Saugeinheit, insbesondere den Staubsauger, einfach mit der Vorrichtung verbinden zu können, ist in den Anschlussstutzen ein Kupplungsstück zum Anschluss des Saugschlauches steckbar. Das Kupplungsstück kann auch so ausgebildet sein, dass es auf den Anschlussstutzen steckbar ist. Auf diese Weise kann die erfindungsgemäße Vorrichtung einfach und ohne großen Aufwand mit der Saugeinheit verbunden werden.

Damit ein problemloser Anschluss des Saugschlauches in jeder Lage der erfindungsgemäßen Vorrichtung möglich ist, ist das Kupplungsstück vorteilhaft als Winkelstück ausgebildet.

Hierbei ist es von Vorteil, wenn dieses Winkelstück im Anschlussstutzen drehbar ist. Dann lässt sich der aus dem Anschlussstutzen ragende Teil des Winkelstückes in eine zum Arbeiten günstige Lage verstellen.

Damit die Belastung der Vorrichtung durch den angeschlossenen Saugschlauch möglichst gering ist, ist der Überstand des Schnittpunktes der Achsen der winklig zueinander liegenden Teile des Kupplungsstückes vom hinteren, benachbarten Rand der Vorrichtung, in Draufsicht auf die Vorrichtung gesehen, gering, beträgt vorzugsweise Null. Der Überstand erzeugt einen Hebelarm, der aufgrund dieser Ausbildung jedoch klein ist, so dass auf die Vorrichtung im Betrieb nur eine geringe Kraft wirkt. Dadurch wird verhindert, dass die auf die Vorrichtung wirkende Kraft größer ist als der Anpressdruck, unter dem die Vorrichtung gegen das Mauerwerk gezogen wird.

Wenn die den Unterdruckraum begrenzende Wand, die Absaughülse und der Anschlussstutzen einstückig miteinander ausgebildet sind, lässt sich die Anschlussvorrichtung kostengünstig herstellen und einfach handhaben.

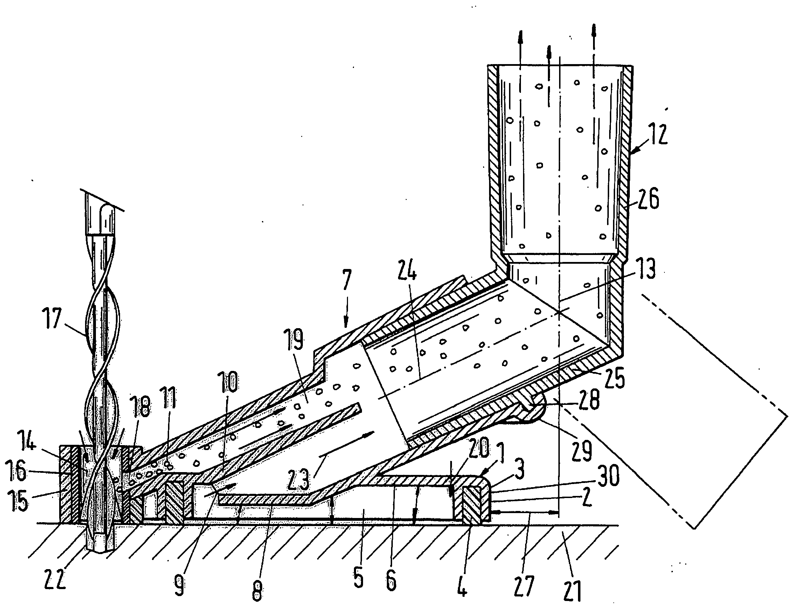

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Die Zeichnung zeigt im Schnitt eine erfindungsgemäße Absaugvorrichtung.

Die Absaugvorrichtung wird dazu eingesetzt, beim Bohren entstehendes Bohrmehl direkt am Bohrort abzusaugen. Die Vorrichtung hat einen Grundkörper 1, der beliebigen Umriss haben kann. Über einen Teil eines Umfanges hat er einen rechtwinklig abgewinkelten Rand 2, in dem eine Vertiefung 3 zur Aufnahme einer Dichtung 4 vorgesehen ist. Sie steht über den Rand 2 vor und umschließt einen Unterdruckraum 5, der durch den Rand 2 mit der Dichtung 4 umfangsseitig und durch eine Decke 6 des Grundkörpers 1 begrenzt wird. In den Unterdruckraum 5 ragt ein rohrförmiger Anschlussstutzen 7, der vorteilhaft einstückig mit dem Grundkörper 1 ausgebildet ist. Der Anschlussstutzen 7 steht über den größten Teil seiner Länge über den Grundkörper 1 vor. Er ragt mit einem Endbereich 8 geringfügig in den Unterdruckraum 5. Der Endbereich 8 hat eine Öffnung 9, über die der Unterdruckraum 5 mit dem Inneren des Anschlussstutzens 7 verbunden ist.

Im Anschlussstutzen 7 verläuft eine Trennwand 10, die sich etwa in halber Querschnittsbreite in Längsrichtung des Anschlussstutzens 7 erstreckt. Durch diese Trennwand 10 wird verhindert, dass das beim Bohren entstehende Bohrgut 11 durch die Öffnung 9 in den Unterdruckraum 5 gelangt. Dementsprechend ist die Trennwand 10 so lang, dass das abgesaugte Bohrgut 11 zuverlässig in ein in den Anschlussstutzen 7 gestecktes Winkelstück 12 gesaugt wird.

Der Unterdruckraum 5 ist von einem Absaugraum 14 strömungstechnisch getrennt. Der Absaugraum 14 hat vorteilhaft kreisförmigen Querschnitt und wird durch eine Führungsbuchse 15 umfangsseitig begrenzt, die in eine Absaughülse 16 eingesetzt ist. Sie ist vorteilhaft einstückig mit dem Grundkörper 1 ausgebildet und steht über eine Außenseite des Grundkörpers über. Die Absaughülse 16 kann auch auswechselbar am Grundkörper 1 vorgesehen sein. Der Innendurchmesser der Führungsbuchse 15 ist auf die Dicke des einzusetzenden Bohrers 17 abgestimmt. Es ist möglich, für unterschiedliche Bohrerdurchmesser unterschiedliche Absaugvorrichtungen zu verwenden. Vorteilhaft ist es, den Innenquerschnitt der Führungsbuchse 15 so zu gestalten, dass sie für einen großen Durchmesserbereich von Bohrern eingesetzt werden kann. Dann ist nur eine Vorrichtung für unterschiedliche Bohrdurchmesser notwendig. Es besteht auch die Möglichkeit, am Grundkörper 1 weitere Absaughülsen mit Führungsbuchsen vorzusehen, die für unterschiedlich große Bohrerbereiche vorgesehen sind.

Die Absaughülse 16 besteht vorteilhaft aus Metall, insbesondere aus Stahl, so dass sie eine hohe Abriebfestigkeit in Bezug auf das anfallende Bohrgut aufweist. Die Absaughülse 16 und die Führungsbuchse 15 sind jeweils mit einer Durchtrittsöffnung 18 versehen, über die der Absaugraum 14 mit einem Saugkanal 19 im Anschlussstutzen 7 in strömungstechnischer Verbindung steht.

In der Decke 6 des Grundkörpers 1 ist wenigstens eine Öffnung 20 vorgesehen, deren Querschnitt nur so groß ist, dass eine durch einen Pfeil gekennzeichnete Luftströmung in den Unterdruckraum 5 eintreten kann. Da der Unterdruckraum 5 über die Öffnung 9 mit dem Saugkanal 19 verbunden ist, wird beim Absaugen des Bohrgutes 11 eine Luftströmung im Unterdruckraum 5 erzeugt, durch welche Außenluft durch die kleine Öffnung 20 eintreten kann. Der Querschnitt der Öffnung 20 ist so klein, dass der Unterdruck im Unterdruckraum 5 beim Absaugen des Bohrgutes 11 jederzeit so hoch ist, dass die Absaugvorrichtung durch den Unterdruck fest gegen die Wand 21 gezogen wird, in der mit dem Bohrer 17 die Bohrung 22 eingebracht wird. Durch den minimalen Luftstrom von der Öffnung 20 durch die Öffnung 9 im Unterdruckraum 5 und durch den Anschlussstutzen 7 wird verhindert, dass das Bohrgut 11 teilweise über die Öffnung 9 in den Unterdruckraum 5 gelangt. Die im Anschluss an die Öffnung 9 im Anschlussstutzen 7 entstehende Strömung 23 ist so stark, dass das durch die Durchtrittsöffnung 18 angesaugte Bohrgut 11 nicht hinter der Trennwand 10 zurück zur Öffnung 9 fällt, sondern einwandfrei durch das Winkelstück 12 abgesaugt wird. Eventuell hinter die Trennwand 10 gelangendes Bohrgut 11 wird durch die Strömung 23 mitgerissen.

Da der Unterdruckraum 5 vom Absaugraum 14 räumlich getrennt ist, besteht nicht die Gefahr, dass sich der Bohrstaub am Mauerwerk 21 absetzt. Vielmehr wird er vollständig über den Anschlussstutzen 7 und das Winkelstück 12 abgesaugt.

Mit der Absaugvorrichtung kann auch an senkrechten Wänden mit der Absaughülse 16 nach unten gebohrt werden, ohne dass die Gefahr besteht, dass das anfallende Bohrgut 11 nach unten in den Unterdruckraum 5 gelangt. Das Bohrgut 11 wird über die Durchtrittsöffnung 18 in den Anschlussstutzen 7 und von dort in das Winkelstück 12 abgesaugt.

Die Leckagebohrung 20 ist vorteilhaft vorgesehen, um den zusätzlichen Luftstrom 23 zu erzeugen. Die Leckageöffnung 20 kann aber auch entfallen, insbesondere dann, wenn die Absaugvorrichtung an horizontalen Wänden angesetzt wird. Aber auch beim Arbeiten an aufrecht verlaufenden Wänden tritt in der Regel kein Bohrgut 11 in den Unterdruckraum 5 ein, weil die Trennwand 10 in Absaugrichtung des Bohrgutes 11 ausreichend lang ist.

Das Winkelstück 12 kann im Betrieb stufenlos um die Achse 24 seines in den Anschlussstutzen 7 gesteckten Steckansatzes 25 gedreht werden. Je nach Lage der Absaugvorrichtung am Mauerwerk 21 kann das Winkelstück 12 durch Drehen um die Achse 24 so eingestellt werden, dass der außerhalb des Anschlussstutzens 7 liegende Teil 26 des Winkelstückes 12 stets nach unten weist. In der Zeichnung sind zwei unterschiedliche Stellungen des Winkelstückes 12 gegenüber dem Anschlussstutzen 7 eingezeichnet.

Das Winkelstück 12 ist so ausgebildet und an der Absaugvorrichtung vorgesehen, dass der Abstand 27 zwischen dem Schnittpunkt 13 der Achsen der Teile 25, 26 des Winkelstückes 12 und dem hinteren Rand 30 des Grundkörpers 1, in Draufsicht auf die Absaugvorrichtung gesehen, so gering wie möglich ist. Durch diesen Abstand 27 wird im Einsatz der Absaugvorrichtung ein Hebelarm gebildet, der zu einer auf den Grundkörper 1 wirkenden Hebelkraft führt. Da an das Winkelstück 12 der (nicht dargestellte) Saugschlauch des Staubsaugers angeschlossen ist, wirkt über den Hebelarm 27 das Gewicht aus Winkelstück 12 und Saugschlauch. Der Grundkörper 1 wird darum in der in der Zeichnung dargestellten Lage im Uhrzeigersinn belastet, d.h. durch die Kraft des Hebelarms 27 entsteht eine gegen den Unterdruck im Unterdruckraum 5 wirkende Kraft, die versucht, die Absaugvorrichtung vom Mauerwerk 21 abzuheben. Da der Hebelarm 27 jedoch gering ist, ist die gegen den Unterdruck wirkende Kraft so gering, dass keine Gefahr besteht, dass die Absaugvorrichtung vom Mauerwerk 21 abgehoben wird.

Das Winkelstück 12 hat im Bereich seines Steckansatzes 25 einen Formschlussteil 28, der mit einem Gegenformschlussteil 29 am Anschlussstutzen 7 zusammenwirkt. Der Formschluss ist so gestaltet, dass das Winkelstück 12 nur in einer bestimmten Lage relativ zum Anschlussstutzen 7 von ihm abgezogen bzw. in ihn eingesetzt werden kann. Im Ausführungsbeispiel ist der Formschluss 28, 29 so ausgebildet, dass das Winkelstück 12 nur in der durch strichpunktierte Linien angedeuteten Lage vom Anschlussstutzen 12 abgezogen werden kann.

Die Durchtrittsöffnung 18 erstreckt sich vorteilhaft in Umfangsrichtung der Wandung der Führungsbuchse 15 und der Absaughülse 16. Dadurch wird das beim Bohren anfallende Bohrgut 11 über einen großen Umfangsbereich zuverlässig abgesaugt und gelangt in den Anschlussstutzen 7. Die Größe des Einlassquerschnittes der Durchtrittsöffnung 18 wird so gewählt, dass die in der Durchtrittsöffnung 18 entstehende Strömungsgeschwindigkeit so hoch ist, dass das an der Bohrstelle 22 anfallende Bohrgut 11 einwandfrei abgesaugt wird. Dadurch wird vor allem verhindert, dass das Bohrgut 11 im Bereich der Bohrstelle 22 verbleibt und es dadurch zu Problemen beim Bohren kommt. Die Durchtrittsöffnung 18 ist außerdem nur so groß, dass der im Unterdruckraum 5 infolge des Saugens entstehende Unterdruck ausreichend hoch ist. Da der Staubsauger die Luft im Anschlussstutzen 7 und im Winkelstück 12 und das darin befindliche Bohrgut 11 absaugt, wird über die Öffnung 9 auch die Luft im Unterdruckraum 5 abgesaugt, wodurch die Absaugvorrichtung zuverlässig gegen das Mauerwerk 21 gesaugt wird.

Die Absaugvorrichtung zeichnet sich durch kompakte Abmessungen aus. Die Decke 6 des Grundkörpers 1 ist vorteilhaft eben, so dass der Grundkörper nur eine geringe Höhe hat. Der Unterdruckraum 5 muss keine große Querschnittsfläche haben, um eine ausreichend hohe Haltekraft zu erzeugen. So kann die Querschnittsfläche des Unterdruckraumes 5 beispielsweise nur 50 mm auf 80 mm betragen. Diese geringe Querschnittsfläche reicht aus, dass eine Haltekraft entsteht, die so hoch ist, dass das über das Winkelstück 12 und den angeschlossenen Saugschlauch wirkende Gewicht nicht ausreicht, die Absaugvorrichtung vom Mauerwerk 21, insbesondere von einer Decke, abzureißen. Hierzu trägt in vorteilhafter Weise auch bei, dass der Hebelarm 27 nur klein ist.

Die Führungsbuchse 15 ist vorteilhaft auswechselbar in der Absaughülse 16 angeordnet, so dass unterschiedlich dicke Führungsbuchsen 15 für unterschiedliche Bohrerdurchmesser verwendet werden können. Die Absaughülse 16 mit dem Grundkörper 1 und dem Anschlussstutzen 7 sind vorteilhaft einstückig aus Kunststoff hergestellt. Dadurch lässt sich die Absaugvorrichtung kostengünstig fertigen, zumal aufwändige Montagearbeiten nicht erforderlich sind. Es ist lediglich die Dichtung 4 in die Vertiefung 3 einzusetzen und in ihr in geeigneter Weise, beispielsweise durch Kleben, zu befestigen. Die Dichtung 4 besteht aus weichem Material, so dass auch bei einer rauen Oberfläche des Mauerwerkes 21 der Unterdruckraum 5 zuverlässig abgedichtet werden kann. Dadurch wird die Absaugvorrichtung auch bei rauem Mauerwerk mit hohem Unterdruck angezogen, so dass sowohl an horizontalen Wänden, insbesondere im Deckenbereich, als auch an aufrechten Wänden problemlos gearbeitet werden kann. Zum Absaugen des Bohrgutes 11 ist jeder herkömmliche Staubsauger geeignet, der einen ausreichend hohen Unterdruck von beispielsweise etwa 200 mbar und eine ausreichend hohe Luftmenge von etwa 25 l/s erzeugt. Mit einem herkömmlichen Staubsauger lässt sich beispielsweise im Unterdruckraum ein Unterdruck von 150 mbar und eine Absauggeschwindigkeit am Bohrer 17 von mehr als 20 m/s erzeugen.

Die Umrissform des Unterdruckraumes 5 kann beliebig gestaltet sein, beispielsweise Rechteck- oder Dreieckform haben.

## Patentansprüche

1. Vorrichtung zum Absaugen von Bohrgut (11) beim Bohren mittels eines Bohrers in Mauerwerk und dergleichen, mit wenigstens einem Unterdruckraum (5), wenigstens einer räumlich vom Unterdruckraum (5) getrennten Absaugstelle (14), einem Anschlussstutzen (7) für eine Saugeinheit, die das an der Absaugstelle (14) anfallende Bohrgut (11) absaugt, und mit wenigstens einer Öffnung (9), über die der Unterdruckraum (5) mit dem Anschlussstutzen (7) strömungstechnisch verbunden ist,
**dadurch gekennzeichnet, dass** zur Erzeugung einer Zwangströmung im Unterdruckraum (5) zum Anschlussstutzen (7) durch die Öffnung (9) in einer Wandung (6) des Unterdruckraumes (5) wenigstens eine Entlastungsöffnung (20) vorgesehen ist, die den Unterdruckraum (5) mit der Umgebung verbindet.

2. Vorrichtung nach Anspruch 1,
**dadurch gekennzeichnet, dass** die Öffnung (9) durch eine Trennwand (10) von einem das Bohrgut (11) führenden Saugkanal (19) im Anschlussstutzen (7) getrennt ist.

3. Vorrichtung nach Anspruch 1 oder 2,
**dadurch gekennzeichnet, dass** die Absaugstelle (14) von einer Führungsbuchse (15) für den Bohrer (17) begrenzt ist.

4. Vorrichtung nach Anspruch 3,
**dadurch gekennzeichnet, dass** die Führungsbuchse (15) in einer Absaughülse (16) aufgenommen ist.

5. Vorrichtung nach Anspruch 4,
**dadurch gekennzeichnet, dass** die Führungsbuchse (15) fest in die Absaughülse (16) eingesetzt ist.

6. Vorrichtung nach einem der Ansprüche 3 bis 5,
**dadurch gekennzeichnet, dass** die Absaughülse (16) mit der Führungsbuchse (15) für andere Durchmesserbereiche der Bohrer (17) auswechselbar ist.

7. Vorrichtung nach einem der Ansprüche 3 bis 6,
**dadurch gekennzeichnet, dass** die Führungsbuchse (15) und die Absaughülse (16) eine den Anschlussstutzen (7) mit der Absaugstelle (14) verbindende Durchtrittsöffnung (18) aufweisen.

8. Vorrichtung nach Anspruch 7,
**dadurch gekennzeichnet, dass** sich die Durchtrittsöffnung (18) in Umfangsrichtung der Führungsbuchse (15) und der Absaughülse (16) erstreckt.

9. Vorrichtung nach einem der Ansprüche 1 bis 8,
**dadurch gekennzeichnet, dass** in den Anschlussstutzen (7) ein vorteilhaft als ein Winkelstück ausgebildetes Kupplungsstück (12) zum Anschluss eines Saugschlauches steckbar ist.

10. Vorrichtung nach Anspruch 9,
**dadurch gekennzeichnet, dass** das Winkelstück (12) im Anschlussstutzen (7) drehbar ist.

11. Vorrichtung nach Anspruch 9 oder 10,
**dadurch gekennzeichnet, dass** der Überstand (27) des Schnittpunktes (13) der Achsen der Teile (25, 26) des Kupplungsstückes (12) vom hinteren Rand (30) der Vorrichtung, in Draufsicht auf die Vorrichtung gesehen, gering ist, vorzugsweise Null beträgt.

12. Vorrichtung nach einem der Ansprüche 1 bis 11,
**dadurch gekennzeichnet, dass** die Wandung des Unterdruckraumes (5), die Absaughülse (16) und der Anschlussstutzen (7) einstückig miteinander ausgebildet sind.

## Claims

1. A device for vacuuming away drilled material (11) when drilling, with a drill in masonry and similar, having at least one vacuum chamber (5), at least one suction site (14) spaced apart from the vacuum chamber (5), a connection fitting (7) for a vacuum unit, which sucks away the drilled material (11) produced at the suction site (14), and having at least one opening (9), via which the vacuum chamber (5) is connected in a fluidically manner to the connection fitting (7),
**characterized in that** at least one relief opening (20) is provided for generating a forced flow in the vacuum chamber (5) to the connection fitting (7) through the opening (9) in a wall (6) of the vacuum chamber (5), which relief opening connects the vacuum chamber (5) to the environment.

2. Device according to claim 1,
**characterized in that** the opening (9) through a separating wall (10) is separated from a suction channel (19) in the connection fitting (7), which guides the drilled material (11).

3. Device according to claim 1 or 2,
**characterized in that** the suction site (14) is limited by a guide bush (15) for the drill (17).

4. Device according to claim 3,
**characterised in that** the guide bush (15) is received in a suction nozzle (16).

5. Device according to claim 4,
**characterised in that** the guide bush (15) is securely inserted into the suction nozzle (16).

6. Device according to one of claims 3 to 5,
**characterized in that** the suction nozzle (16) can be replaced with the guide bush (15) for different diameter ranges of the drill (17).

7. Device according to one of claims 3 to 6,
**characterized in that** the guide bushing (15) and the suction nozzle (16) have a through opening (18) connecting the connection fitting (7) to the suction site (14).

8. Device according to claim 7,
**characterized in that** the through opening (18) extends in the circumferential direction of the guide bush (15) and the suction nozzle (16).

9. Device according to one of claims 1 to 8,
**characterized in that** a coupling piece (12), which is advantageously constructed as an angle piece, for connecting a vacuum hose can be plugged into the connecting fitting (7).

10. Device according to claim 9,
**characterized in that** the angle piece (12) is rotatable in the connection fitting (7).

11. Device according to claim 9 or 10,
**characterized in that** the overhang (27) of the intersection point (13) of the axes of the parts (25, 26) of the coupling piece (12) from the rear edge (30) of the device, as viewed in the plan view onto the device, is small and is preferably zero.

12. Device according to one of claims 1 to 11,
**characterized in that** the wall of the vacuum chamber (5), the suction nozzle (16) and the connection fitting (7) are constructed integrally with one another.

## Revendications

1. Dispositif d'aspiration de produits de forage (11) lors du forage à l'aid d'un foret dans un mur ou analogue, avec au moins un compartiment de dépression (5), au moins un emplacement d'aspiration (14) séparé dans l'espace du compartiment de dépression (5), un embout de raccord (7) pour une unité d'aspiration qui aspire les produits de forage (11) se déposant dans l'emplacement d'aspiration (14) et avec au moins une ouverture (9) par le biais de laquelle le compartiment de dépression (5) est relié selon la technique des fluides à l'embout de raccord (7),
**caractérisé en ce que** pour produire un courant forcé dans le compartiment de dépression (5) vers l'embout de raccord (7) à travers l'ouverture (9) dans une paroi (6) du compartiment de dépression (5) au moins une ouverture d'aération (20) est prévue qui relie le compartiment de dépression (5) à l'environnement

2. Dispositif selon la revendication 1,
**caractérisé en ce que** l'ouverture (9) est séparée par une paroi de séparation (10) d'un conduit d'aspiration (19) dans l'embout de raccord (7) guidant les produits de forage (11).

3. Dispositif selon la revendication 1 ou 2,
**caractérisé en ce que** l'emplacement d'aspiration (14) est délimité par une douille de guindage (15) pour le foret (17).

4. Dispositif selon la revendication 3,
**caractérisé en ce que** la douille de guidage (15) est logée dans un manchon d'aspiration (16).

5. Dispositif selon la revendication 4,
**caractérisé en ce que** la douille de guidage (15) est insérée fermement dans le manchon d'aspiration (16).

6. Dispositif selon l'une quelconque des revendications 3 à 5,
**caractérisé en ce que** le manchon d'aspiration (16) peut être changé avec la douille de guidage (15) pour d'autres gammes de diamètres des forets (17).

7. Dispositif selon l'une quelconque des revendications 3 à 6,
**caractérisé en ce que** la douille de guidage (15) et le manchon d'aspiration (16) comportent une ouverture de passage (18) reliant l'embout de raccord (7) à l'emplacement d'aspiration (14).

8. Dispositif selon la revendication 7,
**caractérisé en ce que** l'ouverture de passage (18) s'étend dans le sens périphérique de la douille de guidage (15) et du manchon d'aspiration (16).

9. Dispositif selon l'une quelconque des revendications 1 à 8,
**caractérisé en ce qu'**une pièce d'accouplement (12) constituée avantageusement comme une pièce angulaire peut être enfichée dans l'embout de raccord (7) pour raccorder un flexible d'aspiration.

10. Dispositif selon la revendication 9,
**caractérisé en ce que** la pièce angulaire (12) peut être tournée dans l'embout de raccord (7).

11. Dispositif selon la revendication 9 ou 10,
**caractérisé en ce que** la saillie (27) du point d'intersection (13) des axes des parties (25, 26) de la pièce d'accouplement (12) est faible, de préférence nulle, depuis le bord arrière (30) du dispositif, vue en vue de dessus du dispositif.

12. Dispositif selon l'une quelconque des revendications 1 à 11,
**caractérisé en ce que** la paroi du compartiment de dépression (5), le manchon d'aspiration (16) et l'embout de raccord (7) sont constitués en formant entre eux une seule pièce.
